(19) Europäisches Patentamt
European Patent Office
Office européen des brevets

(11) **EP 3 059 890 B1**

(12) **EUROPEAN PATENT SPECIFICATION**

(45) Date of publication and mention
of the grant of the patent:
**26.09.2018 Bulletin 2018/39**

(51) Int Cl.:
*H04L 1/00* (2006.01)   *H04L 1/06* (2006.01)
*H04B 7/06* (2006.01)   *H04B 7/08* (2006.01)
*H04L 27/26* (2006.01)

(21) Application number: **16165127.8**

(22) Date of filing: **10.01.2007**

(54) **METHOD AND APPARATUS FOR IMPLEMENTING SPACE TIME PROCESSING WITH UNEQUAL MODULATION AND CODING SCHEMES**

VERFAHREN UND VORRICHTUNG ZUR UMSETZUNG DER RAUMZEITVERARBEITUNG MIT UNGLEICHEN MODULIER- UND CODIERUNGSSCHEMEN

PROCÉDÉ ET APPAREIL POUR LA MISE EN UVRE DU TRAITEMENT DE L'ESPACE-TEMPS AVEC DES SCHÉMAS DE MODULATION ET DE CODAGE DIFFÉRENTS

(84) Designated Contracting States:
**AT BE BG CH CY CZ DE DK EE ES FI FR GB GR HU IE IS IT LI LT LU LV MC NL PL PT RO SE SI SK TR**

(30) Priority: **11.01.2006 US 758034 P**

(43) Date of publication of application:
**24.08.2016 Bulletin 2016/34**

(60) Divisional application:
**18188132.7**

(62) Document number(s) of the earlier application(s) in accordance with Art. 76 EPC:
**07717949.7 / 1 989 806**

(73) Proprietor: **InterDigital Technology Corporation Wilmington, DE 19809 (US)**

(72) Inventors:
• **OLESEN, Robert L.**
**Huntington, NY New York 11743 (US)**
• **ZEIRA, Eldad**
**Huntington, NY New York 11743 (US)**
• **VOLTZ, Peter J.**
**Commack, NY New York 11725 (US)**
• **YANG, Yongwen**
**Hillsborough, NJ New Jersey 08844 (US)**
• **DAI, Qingyuan**
**Germantown, MD Maryland 20874 (US)**
• **KOO, Chang-Soo**
**Melville, NY New York 11747 (US)**
• **LU, I-Tai**
**Dix Hills, NY New York 11746 (US)**
• **TSAI, KunJun**
**350 Miaoli Chunan (TW)**

(74) Representative: **AWA Sweden AB**
**P.O. Box 5117**
**200 71 Malmö (SE)**

(56) References cited:
**EP-A- 1 255 369        EP-A- 1 511 189**
**EP-A- 1 515 471        WO-A-03/075479**
**US-A1- 2004 082 356    US-A1- 2004 196 919**
**US-A1- 2004 202 257**

• **BJERKE B A ET AL: "Packet Error Probability Prediction for System Level Simulations of MIMO-OFDM Based 802.11n WLANs", COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, 16 May 2005 (2005-05-16), pages 2538-2542, XP010825644, ISBN: 0-7803-8938-7**
• **JOHN KETCHUM ET AL: "System Description and Operating Principles for High Throughput Enhancements to 802.11", , 13 August 2004 (2004-08-13), XP007903433, Retrieved from the Internet: URL:www.ieee802.org/11/DocFiles/04/11-04-0 870-00-000n-802-11-ht-system-description-a nd-operating-principles.doc [retrieved on 2007-11-14]**

EP 3 059 890 B1

- KAGAMI O; TOYODA I; UMEHIRA M: "Technologies for Next-generation Wireless LANs", NTT TECHNICAL REVIEW , vol. 3, no. 1 January 2005 (2005-01), pages 31-36, XP002459016, Retrieved from the Internet: URL:http://www.ntt.co.jp/tr/0501/files/ntr 200501031.pdf [retrieved on 2007-11-15]
- BAUCH G ET AL: "Orthogonal frequency division multiple access with cyclic delay diversity", SMART ANTENNAS, 2004. ITG WORKSHOP ON MUNICH, GERMANY MARCH 18-19, 2004, PISCATAWAY, NJ, USA,IEEE, 18 March 2004 (2004-03-18), pages 17-24, XP010780073, DOI: 10.1109/WSA.2004.1407642 ISBN: 978-0-7803-8327-2

- AFZAL LODHI ET AL: "Cyclic delay diversity based space-time/space-frequency coded MC-CDMA system", IEEE VEHICULAR TECHNOLOGY MAGAZINE, IEEE, US, vol. 1, no. 3, 1 September 2006 (2006-09-01), pages 22-29, XP011165320, ISSN: 1556-6072, DOI: 10.1109/MVT.2006.307295

**Description**

FIELD OF INVENTION

The present invention is related to wireless communication systems. More particularly, the present invention is related to a method and apparatus for implementing spatial processing with unequal modulation and coding schemes (MCSs).

BACKGROUND

The IEEE 802.11n joint proposal group currently proposes using a hybrid space-time block code (STBC) and spatial division multiplexing (SDM) scheme for the next generation of high performance wireless networks. This hybrid STBC/SDM scheme results in unbalanced quality of service for data streams which translates into lower residual signal-to-noise ratio (SNR) at the output of a receiver. In conventional systems, equal MCSs are applied to all spatial streams. However, this results in a loss of benefits of the diversity gain for the spatial stream carried by STBC precoding.

Therefore, it would be desirable to provide a method and apparatus for applying unequal MCSs or stream-dependent MCSs while performing spatial processing, such as STBC.

US-2004/0196919-A1 describes a MIMO-method for transmitting a stream of data symbols. The symbols are provided to a combined switch/demultiplexer, which selects a subset of antenna subgroups as active. The demultiplexer splits data streams into substreams, which are fed to said antenna subgroups. Each substream is adaptively modulated and coded to a maximum data rate. Space-time transmit diversity, STTD, encoding is applied to generate multiple output streams, one for each antenna of the subgroups.

US-2004/0202257-A1 describes a transmission method for transmitting an input stream of data symbols. The input stream is demultiplexed into substreams. Each of the substreams is adaptively modulated and coded to a coded substream according to channel conditions. A first of the coded substreams is space-time transmit diversity encoded into two space-time transmit diversity encoded substreams. There is one space-time transmit diversity encoded substream for each one of two transmit antennas. Each other coded substream is transmitted directly by a corresponding one of remaining transmit antennas.

SUMMARY

The present invention is related to a method and apparatus for implementing spatial processing with unequal MCSs or stream-dependent MCSs. Input data may be parsed into a plurality of spatial streams, and spatial processing is performed on the spatial streams to generate a plurality of space-time streams. An MCS for each spatial stream is selected independently. The space-time streams are then transmitted via multiple transmit antennas. At least one of the techniques of STBC, space frequency block coding (SFBC), quasi-orthogonal Alamouti coding, time reversed space time block coding, linear spatial processing and cyclic delay diversity (CDD) may be performed on the spatial streams. An antenna mapping matrix may then be applied to the space-time streams. The resulted space-time streams are then transmitted via multiple transmit antennas. The MCS for each spatial stream may be determined based on an SNR of each spatial stream. The invention is described in the independent claims, further embodiments can be found in the dependent claims.

BRIEF DESCRIPTION OF THE DRAWINGS

A more detailed understanding of the invention may be had from the following description of a preferred embodiment, given by way of example and to be understood in conjunction with the accompanying drawings wherein:

Figure 1 is a block diagram of a transmitter configured in accordance with the present invention;
Figure 2 is a block diagram of a receiver configured in accordance with the present invention;
Figure 3 is a block diagram of an exemplary spatial processing unit configured to perform STBC and/or linear spatial mapping; and
Figures 4 and 5 show simulation results for IEEE 802.11n channels E and B using a $3 \times 2$ antenna configuration and a linear minimum mean square error (LMMSE) receiver.

DETAILED DESCRIPTION OF THE PREFERRED EMBODIMENTS

In accordance with the present invention, unequal MCSs or stream-dependent MCSs are applied to different spatial streams. The present invention may be applied in an orthogonal frequency division multiplexing (OFDM)-multiple-input multiple-output (MIMO) system, a multi-carrier code division multiple access (MC-CDMA) system, a CDMA system, or the like. Unequal MCSs are applied in different data streams to take advantage of unequal SNRs for different data streams. According to the claimed invention, a higher order MCS is applied to a spatial stream which has diversity coding and a lower order MCS to a spatial stream that does not have diversity coding to reduce the total self induced interference. With unequal MCSs, or stream-dependent MCSs, a simpler receiver algorithm, (e.g., linear minimum mean square error (LMMSE)), may be used due to the reduced self interference.

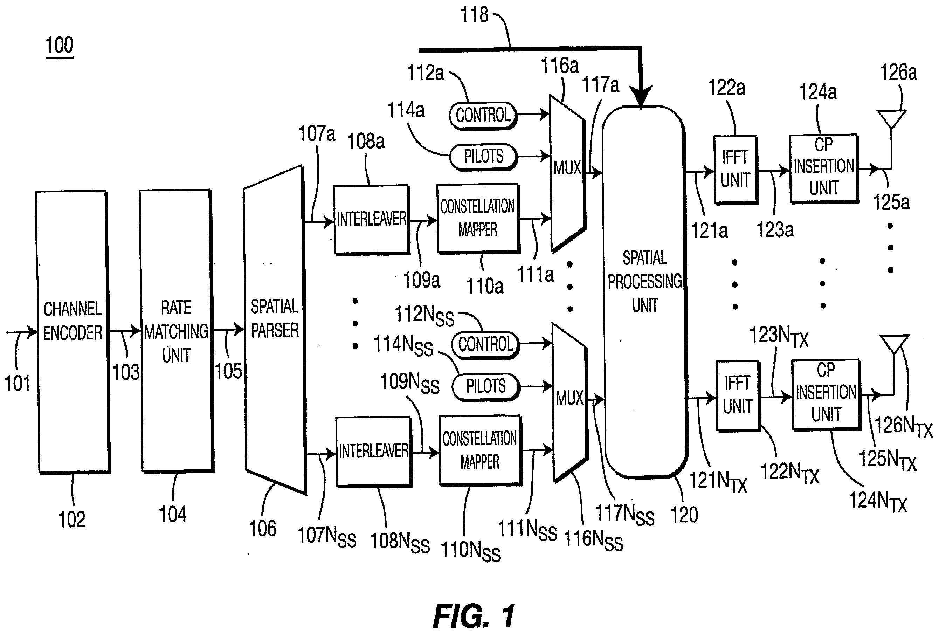

Figure 1 is a block diagram of a transmitter 100 configured in accordance with the present invention. The transmitter 100 includes a channel encoder 102, a rate matching unit 104, a spatial parser 106, a plurality of interleavers 108a-108$n_{ss}$, a plurality of constellation mappers 110a-110$n_{ss}$, a plurality of multiplexers 116a-116$n_{ss}$, a spatial process-ing unit 120, a plurality of inverse fast Fourier transform (IFFT) units 122a-122$n_{tx}$, a plurality of cyclic prefix (CP) insertion units 124a-124$n_{tx}$ and a plurality of transmit antennas 126a-126$n_{tx}$. It should be noted that the configuration shown in Figure 1 is provided as an example, not as a limitation, and the processing performed by the components may be implemented by more or less components and the order of processing may be changed.

The channel encoder 102 encodes input data 101. Adaptive modulation and coding (AMC) is used and any coding rate and any coding scheme may be used. For example, the coding rate may be ½, 1/3, 1/5, ¾, or the like. The coding scheme may be Turbo coding, convolutional coding, block coding, low density parity check (LDPC) coding, or the like. The encoded data 103 may be punctured by the rate matching unit 104.

The encoded data after rate matching 105 is parsed into a plurality of ($N_{SS}$) spatial streams 107a-107$n_{ss}$ by the spatial parser 106. Data bits on each data stream 107a-107$n_{ss}$ are preferably interleaved by the interleaver 108a-108$n_{ss}$. The data bits after interleaving 109a-109$n_{ss}$ are then mapped to symbols 111a-111$n_{ss}$ by the constellation mappers 110a-110$n_{ss}$ in accordance with a selected modulation scheme. The modulation scheme may be Quadrature phase shift keying (QPSK), 8PSK, 16 Quadrature amplitude modulation (QAM), 64 QAM, or the like. Control data 112a-112$n_{ss}$ and/or pilots 114a-114$n_{ss}$ are multiplexed with symbols 111a-111$n_{ss}$ by the multiplexer 116a-116$n_{ss}$. The symbols 117a-117$n_{ss}$ (including the multiplexed control data 112a-112$n_{ss}$ and/or pilots 114a-114$n_{ss}$) are processed by the spatial processing unit 120.

Alternatively, the input data 101 may be split prior to channel encoding and the split multiple input data may be encoded by two or more separate encoders. Alternatively, instead of, or in addition to, parsing one data stream into multiple data streams, several input data streams that may belong to one or more users may be processed to be transmitted via several spatial streams.

The spatial processing unit 120 selectively performs spatial processing on the symbols 117a-117$n_{ss}$ based on channel state information 118 and outputs $N_{TX}$ data streams 121a-121$n_{tx}$. The spatial processing may be space time coding (STC), spatial multiplexing (SM), linear spatial mapping, or transmit beamforming. For STC, any form of STC may be used including STBC, SFBC, quasi-orthogonal Alamouti for four (4) transmit antennas, time reversed STBC (TR-STBC), CDD, or the like.

The channel state information 118 may be at least one of a V matrix for every sub-carrier, an SNR, a channel matrix rank, a channel condition number, delay spread, or short and/or long term channel statistics. The V matrix is an unitary matrix obtained from the singular value decomposition (SVD) of the estimated channel matrix. The channel condition number is related to the rank of the channel matrix. An ill-conditioned channel may be rank deficient. A low rank, or ill-conditioned channel would exhibit better robustness using a diversity scheme such as STBC since the channel would not have sufficient degree of freedom to support SM with transmit beamforming. A high rank channel would support higher data rates using SM with transmit beamforming. The channel state information 118 may be obtained using conventional techniques, such as direct channel feedback (DCFB).

The data streams 121a-121$n_{tx}$ from the spatial processing unit 120 are processed by the IFFT units 122a-122$n_{tx}$ which output time domain data 123a-123$n_{tx}$. A CP is added to each of the time domain data 123a-123$n_{tx}$ by the CP insertion unit 124a-124$n_{tx}$. The time domain data with CP 125a-125$n_{tx}$ is then transmitted via the transmit antennas 126a-126$n_{tx}$.

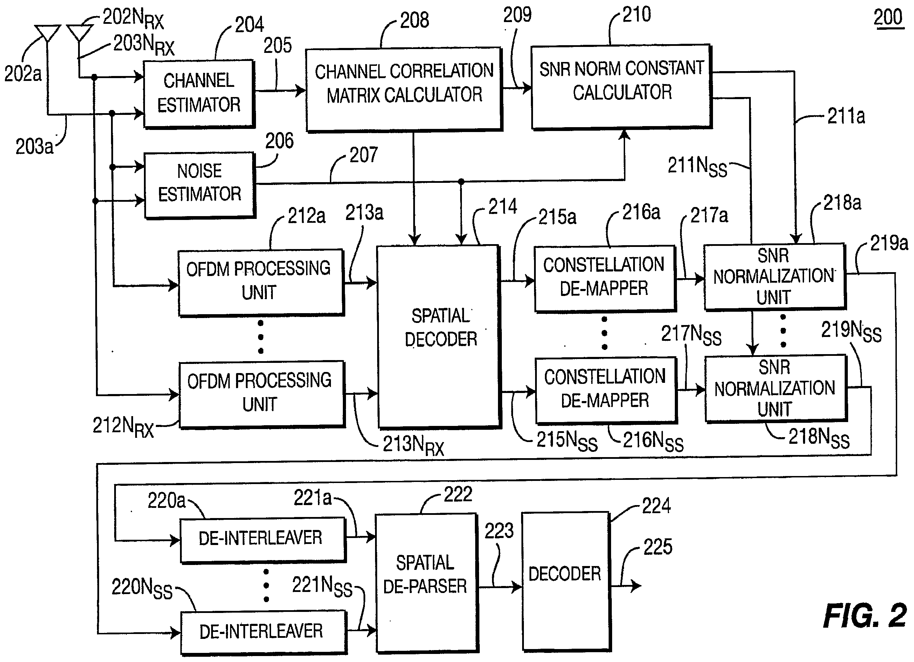

Figure 2 is a block diagram of a receiver 200 configured in accordance with the present invention. The receiver 200 comprises a plurality of receive antennas 202a-202$n_{rx}$, a channel estimator 204, a noise estimator 206, a channel correlation matrix calculator 208, an SNR norm constant calculator 210, a plurality of OFDM processing units 212a-212$n_{rx}$, a spatial decoder 214, a plurality of constellation de-mappers 216a-216$n_{ss}$, a plurality of SNR normalization units 218a-218$n_{ss}$, a plurality of de-interleavers 220a-220$n_{ss}$, a spatial de-parser 222 and a decoder 224. It should be noted that the configuration shown in Figure 2 is provided as an example, not as a limitation, and the processing performed by the components may be implemented by more or less components and the order of processing may be changed.

A plurality of received data streams 203a-203$n_{rx}$ are input into the channel estimator 204, the noise estimator 206 and the OFDM processing units 212a-212$n_{rx}$. The channel estimator 204 performs channel estimate to generate a channel matrix 205 using a conventional method. The noise estimator 206 calculates a noise variance 207. The channel correlation matrix calculator 208 generates a correlation matrix 209 from the channel matrix 205, which will be explained in detail hereinafter. The SNR norm constant calculator 210 calculates SNR norm constants 211a-211$n_{ss}$ from the

correlation matrix 209 and the noise variance 207, which will be explained in detail hereinafter.

Each of the OFDM processing unit 212a-212n$_{rx}$ removes a CP from each received data stream 203a-203n$_{rx}$ and performs a fast Fourier transform (FFT) to output frequency domain data 213a-213n$_{rx}$. The outputs 213a-213n$_{rx}$ from the OFDM processing units 212a-212n$_{rx}$ are processed by the spatial decoder 214. The spatial decoder 214 may be a minimum mean square error (MMSE) decoder, an MMSE-successive interference cancellation (SIC) decoder or a maximum likelihood (ML) decoder.

After spatial decoding, the decoded data 215a-215n$_{ss}$ is processed by the constellation de-mappers 216a-216n$_{ss}$ to generate bit streams 217a-217n$_{ss}$. The bit streams 217a-217n$_{ss}$ are normalized by the SNR normalization units 218a-218n$_{ss}$ based on the SNR norm constants 211a-211n$_{ss}$. The normalized bits streams 219a-219n$_{ss}$ are then processed by the de-interleavers 220a-220n$_{ss}$. The de-interleaved bits 221a-221n$_{ss}$ are merged into one bit stream 223 by the spatial de-parser 222. The bit stream 223 is then processed by the decoder 224 to recover the input data 225.

Hereinafter, spatial processing at the transmitter 100 and the receiver 200 will be explained with reference to STBC as a representative example. The following definitions will be used:

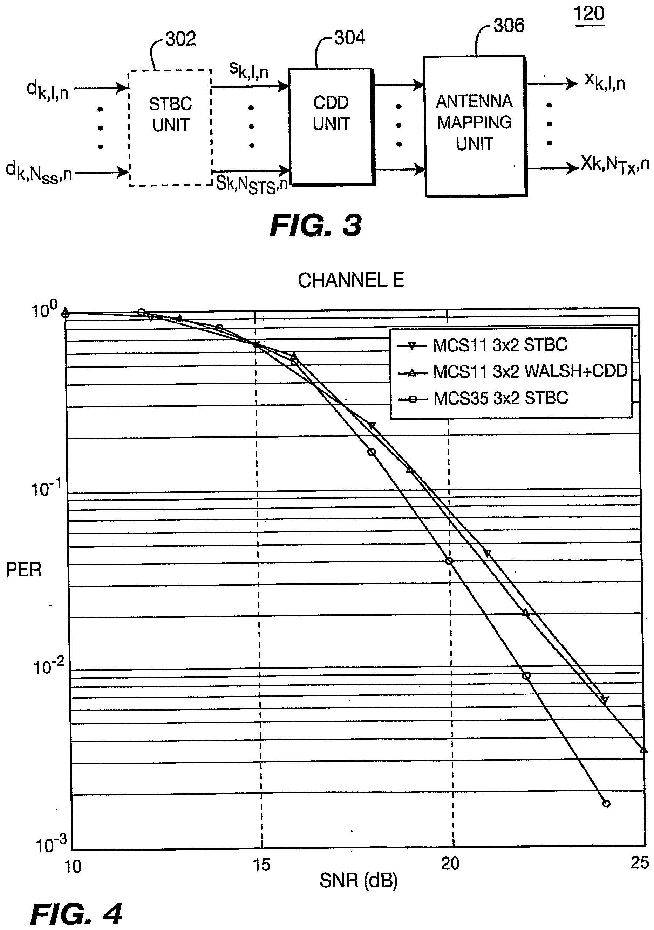

$N_{TX}$: the number of transmit antennas;
$N_{SS}$: the number of spatial streams;
$N_{STS}$: the number of streams after STBC;
$d_{k,n}$: a data vector at symbol time $n$;
$s_{k,n}$: a vector after STBC at symbol time $n$;
$x_{k,n}$: a vector after **P** matrix in Figure 3 at symbol time $n$; and
$y_{k,n}$: a received vector at symbol time $n$.

Figure 3 is a block diagram of an exemplary spatial processing unit 120 configured to perform STBC and/or linear spatial mapping. The spatial processing unit 120 may include an STBC unit 302, a CDD unit 304 and an antenna mapping unit 306. Each of the symbols 117a-117n$_{ss}$ is a stream of complex numbers. A complex symbol transmitted on a spatial stream $i$ of a subcarrier $k$ of an OFDM symbol $n$ is denoted by $d_{k,i,n}$. The STBC unit 302 processes two sequential OFDM symbols in each subcarrier. The output symbols from the STBC unit 302 on an output space-time stream $i_{STS}$ on a subcarrier $k$ on OFDM symbols $2m$ and $2m+1$ are given by:

$$s_{k,i_{STS},2m} = f_{0,i_{STS}}\left(d_{k,i_{SS},2m}, d_{k,i_{SS},2m+1}\right)$$
$$s_{k,i_{STS},2m+1} = f_{1,i_{STS}}\left(d_{k,i_{SS},2m}, d_{k,i_{SS},2m+1}\right),$$

Equation (1)

where $f_{0,i_{STS}}$ and $f_{1,i_{STS}}$ are defined in Table 1.

Table 1

| $N_{STS}$ | $N_{SS}$ | $i_{STS}$ | $f_{0,i_{STS}}$ | $f_{1,i_{STS}}$ |
|---|---|---|---|---|
| 2 | 1 | 1 | $d_{k,1,2m}$ | $d_{k,1,2m+1}$ |
| | | 2 | $-d^*_{k,1,2m+1}$ | $d^*_{k,1,2m}$ |
| 3 | 2 | 1 | $d_{k,1,2m}$ | $d_{k,1,2m+1}$ |
| | | 2 | $-d^*_{k,1,2m+1}$ | $d^*_{k,1,2m}$ |
| | | 3 | $d_{k,2,2m}$ | $d_{k,2,2m+1}$ |

(continued)

| $N_{STS}$ | $N_{SS}$ | $i_{STS}$ | $f_{0,i_{STS}}$ | $f_{1,i_{STS}}$ |
|---|---|---|---|---|
| 4 | 2 | 1 | $d_{k,1,2m}$ | $d_{k,1,2m+1}$ |
| | | 2 | $-d^*_{k,1,2m+1}$ | $d^*_{k,1,2m}$ |
| | | 3 | $d_{k,2,2m}$ | $d_{k,2,2m+1}$ |
| | | 4 | $-d^*_{k,2,2m+1}$ | $d^*_{k,2,2m}$ |
| | 3 | 1 | $d_{k,1,2m}$ | $d_{k,1,2m+1}$ |
| | | 2 | $-d^*_{k,1,2m+1}$ | $d^*_{k,1,2m}$ |
| | | 3 | $d_{k,2,2m}$ | $d_{k,2,2m+1}$ |
| | | 4 | $d_{k,3,2m}$ | $d_{k,3,2m+1}$ |

Linear spatial processing may be performed by the CDD unit 304 and the antenna mapping unit 306 on the output symbols from the STBC unit 302. If STBC is not performed, $s_{k,i,n} = d_{k,i,n}$ and $N_{STS}=N_{SS}$. Linear spatial processing is defined as a sequence of rotations of the vector of symbols that is to be transmitted in a given subcarrier. The processing by the CDD unit 304 and the antenna mapping unit 306 are expressed as follows:

$$\mathbf{x}_{k,n} = \left[ \mathbf{P}_{\mathrm{map}}(k) \right]_{N_{STS}} \mathbf{C}_{\mathrm{CDD}}(k)\mathbf{s}_{k,n},$$

<div align="right">Equation (2)</div>

where $\mathbf{s}_{k,n} = [s_{k,1,n} \cdots s_{k,N_{STS},n}]^T$ is an $N_{STS}$-vector of modulation symbols to be transmitted on a subcarrier $k$ of an OFDM symbol n. $C_{CDD}(k)$ is an $N_{SS} \times N_{SS}$ diagonal cyclic delay matrix which represents the cyclic delay in the frequency domain. The diagonal values are given by $\left[ \mathbf{C}_{\mathrm{CDD}}(k) \right]_{i,i} = \exp\left( -j2\pi k \Delta_F T^i_{CS} \right)$. $[\mathbf{P}_{\mathrm{map}}(k)]$ $_{N_{STS}}$ is an $N_{Tx} \times N_{STS}$ matrix comprising the first $N_{STS}$ columns of the $N_{TX} \times N_{TX}$ unitary antenna mapping matrix $P_{\mathrm{map}}(k)$. This may be an identity matrix for direct-mapped operation, a mapping matrix for spatial spreading operation, or a channel-specific steering matrix such as a set of channel eigenvectors. $\mathbf{x}_{k,n}$ is an $N_{TX}$-vector of transmitted symbols in a subcarrier $k$ of an OFDM symbol $n$.

A channel matrix $H_{eff}$ is an effective channel seen by the vector $s_{k,n}$ so that:

$$\boldsymbol{y}_{k,n} = \boldsymbol{H}_{eff}\, \boldsymbol{s}_{k,n} + \boldsymbol{n}_{k,n}.$$

<div align="right">Equation (3)</div>

In the receiver, $\boldsymbol{y}_{k,2m}$ and $\boldsymbol{y}^*_{k,2m+1}$ are combined into a single vector as follows:

$$\boldsymbol{y}_k = \begin{bmatrix} \boldsymbol{y}_{k,2m} \\ \boldsymbol{y}^*_{k,2m+1} \end{bmatrix}.$$

<div align="right">Equation (4)</div>

Using Equations (3) and (4),

$$\boldsymbol{y}_k = \begin{bmatrix} \boldsymbol{H}_{eff}\boldsymbol{s}_{k,2m} \\ \boldsymbol{H}^*_{eff}\boldsymbol{s}^*_{k,2m+1} \end{bmatrix} + \begin{bmatrix} \boldsymbol{n}_{k,2m} \\ \boldsymbol{n}^*_{k,2m+1} \end{bmatrix}.$$

<div align="right">Equation (5)</div>

In the vectors $s_{k,2m}$ and $s_{k,2m+1}^{*}$, any data value that appears in either of them will appear either conjugated in both or unconjugated in both. This allows writing Equation (5) as a simple matrix form, as illustrated by the following specific example.

Consider the case of $N_{tx} = 3$ and $N_{ss} = 2$, (i.e., two (2) spatial streams are generated from input data by the spatial parser 106 and three data streams are generated from the spatial processing unit 120 at the transmitter 100). One of the three data streams is created from the modified replica of one data stream of the spatial parser 106 for transmit diversity as shown below.

From Table 1, for the case of $N_{tx} = 3$ and $N_{ss} = 2$, the following can be seen:

$$s_{k,1,2m} = d_{k,1,2m};$$

$$s_{k,2,2m} = -d_{k,1,2m+1}^{*};$$

and

$$s_{k,3,2m} = d_{k,2,2m}.$$

so that

$$s_{k,2m} = \begin{bmatrix} d_{k,1,2m} \\ -d_{k,1,2m+1}^{*} \\ d_{k,2,2m} \end{bmatrix}. \qquad\qquad \text{Equation (6)}$$

Also,

$$s_{k,1,2m+1} = d_{k,1,2m+1};$$

$$s_{k,2,2m+1} = d_{k,1,2m}^{*};$$

and

$$s_{k,3,2m+1} = d_{k,2,2m+1}.$$

so that

$$s_{k,2m+1} = \begin{bmatrix} d_{k,1,2m+1} \\ d_{k,1,2m}^{*} \\ d_{k,2,2m+1} \end{bmatrix}; \qquad\qquad \text{Equation (7)}$$

and

$$s_{k,2m+1}^* = \begin{bmatrix} d_{k,1,2m+1}^* \\ d_{k,1,2m} \\ d_{k,2,2m+1}^* \end{bmatrix}.$$

Equation (8)

Using Equations (6) and (8), Equation (5) can be re-written as a standard matrix equation involving the four data values $d_{k,1,2m}$, $d_{k,1,2m+1}^*$, $d_{k,2,2m}$, $d_{k,2,2m+1}^*$ as follows (the asterisks mean conjugation, not Hermitian conjugation).

$$y_k = \begin{bmatrix} H_{eff}(:,1) & -H_{eff}(:,2) & H_{eff}(:,3) & 0 \\ H_{eff}^*(:,2) & H_{eff}^*(:,1) & 0 & H_{eff}^*(:,3) \end{bmatrix} \begin{bmatrix} d_{k,1,2m} \\ d_{k,1,2m+1}^* \\ d_{k,2,2m} \\ d_{k,2,2m+1}^* \end{bmatrix} + \begin{bmatrix} n_{k,2m} \\ n_{k,2m+1}^* \end{bmatrix}.$$

Equation (9)

This is now in a standard MIMO form, but with a channel matrix which is a composite of the various columns of $H_{eff}$. The receiver 200 demodulates the data vector $d$:

$$d = \begin{bmatrix} d_{k,1,2m} \\ d_{k,1,2m+1}^* \\ d_{k,2,2m} \\ d_{k,2,2m+1}^* \end{bmatrix}.$$

Equation (10)

An MMSE demodulator may be used for the data vector in Equation (10). Let the channel matrix in Equation (9) be denoted as follows:

$$\tilde{H} = \begin{bmatrix} H_{eff}(:,1) & -H_{eff}(:,2) & H_{eff}(:,3) & 0 \\ H_{eff}^*(:,2) & H_{eff}^*(:,1) & 0 & H_{eff}^*(:,3) \end{bmatrix}.$$

Equation (11)

An MMSE solution is as follows (dropping the index k and using the symbol '+' for Hermitian conjugate):

$$\hat{d} = \left( \frac{1}{\sigma_d^2} I + \frac{1}{\sigma_n^2} \tilde{H}^+ \tilde{H} \right)^{-1} \tilde{H}^+ \frac{1}{\sigma_n^2} y ;$$

Equation (12)

or, equivalently,

$$\hat{d} = \left( \frac{\sigma_n^2}{\sigma_d^2} I + \tilde{H}^+ \tilde{H} \right)^{-1} \tilde{H}^+ y.$$

Equation (13)

Equation (9) can be written as follows:

$$y = \tilde{H}\, d + n.$$

Equation (14)

Substituting Equation (14) into Equation (12) yields:

$$\hat{d} = \left(\frac{\sigma_n^2}{\sigma_d^2} I + \tilde{H}^+ \tilde{H}\right)^{-1} \tilde{H}^+ \tilde{H}\, d + \left(\frac{\sigma_n^2}{\sigma_d^2} I + \tilde{H}^+ \tilde{H}\right)^{-1} \tilde{H}^+ n.$$

Equation (15)

Using Equation (11), the correlation matrix $\tilde{H}^+ \tilde{H}$ becomes as follows:

$$\tilde{H}^+ \tilde{H} = \begin{bmatrix} H_{eff}^+(:,1) & H_{eff}^T(:,2) \\ -H_{eff}^+(:,2) & H_{eff}^T(:,1) \\ H_{eff}^+(:,3) & 0 \\ 0 & H_{eff}^T(:,3) \end{bmatrix} \begin{bmatrix} H_{eff}(:,1) & -H_{eff}(:,2) & H_{eff}(:,3) & 0 \\ H_{eff}^*(:,2) & H_{eff}^*(:,1) & 0 & H_{eff}^*(:,3) \end{bmatrix}$$

$$\tilde{H}^+ \tilde{H} = \begin{bmatrix} \|H_{eff}(:,1)\|^2 + \|H_{eff}(:,2)\|^2 & 0 & H_{eff}^+(:,1)H_{eff}(:,3) & H_{eff}^+(:,3)H_{eff}(:,2) \\ 0 & \|H_{eff}(:,1)\|^2 + \|H_{eff}(:,2)\|^2 & -H_{eff}^+(:,2)H_{eff}(:,3) & H_{eff}^+(:,3)H_{eff}(:,1) \\ H_{eff}^+(:,3)H_{eff}(:,1) & -H_{eff}^+(:,3)H_{eff}(:,2) & \|H_{eff}(:,3)\|^2 & 0 \\ H_{eff}^+(:,2)H_{eff}(:,3) & H_{eff}^+(:,1)H_{eff}(:,3) & 0 & \|H_{eff}(:,3)\|^2 \end{bmatrix}$$

Equation (16)

The effective SNR for the $k^{th}$ data stream in Equation (9), after MMSE receiver processing, is known to be:

$$SNR_k = \frac{1}{\left(I + \rho\, \tilde{H}^+ \tilde{H}\right)^{-1}_{kk}} - 1;$$

Equation (17)

where $\rho = \dfrac{\sigma_d^2}{\sigma_n^2}.$

For high SNR, Equation (17) becomes:

$$SNR_k \approx \frac{\rho}{\left(\tilde{H}^+ \tilde{H}\right)^{-1}_{kk}}.$$

Equation (18)

The matrix $\tilde{H}^+ \tilde{H}$ has the form:

$$\tilde{H}^+ \tilde{H} = \begin{bmatrix} x & 0 & a & b \\ 0 & x & -b^* & a^* \\ a^* & -b & z & 0 \\ b^* & a & 0 & z \end{bmatrix}.$$

Equation (19)

The definitions of the parameters in Equation (19) are easily found from the expression for $\tilde{H}^+ \tilde{H}$. Using the general formula for the inverse of a matrix as follows:

$$A^{-1} = \frac{cof^T(A)}{\det(A)};$$

Equation (20)

it can be shown that the diagonal elements of $(\tilde{H}^+ H)^{-1}$ are given by:

$$\left(\tilde{H}^+ \tilde{H}\right)^{-1}_{11} = \frac{z\left(x\,z - |b|^2 - |a|^2\right)}{\det(\tilde{H}^+ \tilde{H})};$$

Equation (21)

$$\left(\tilde{H}^+ \tilde{H}\right)^{-1}_{22} = \frac{z\left(x\,z - |b|^2 - |a|^2\right)}{\det(\tilde{H}^+ \tilde{H})};$$

Equation (22)

$$\left(\tilde{H}^+ \tilde{H}\right)^{-1}_{33} = \frac{x\left(x\,z - |b|^2 - |a|^2\right)}{\det(\tilde{H}^+ \tilde{H})}; \text{ and}$$

Equation (23)

$$\left(\tilde{H}^+ \tilde{H}\right)^{-1}_{44} = \frac{x\left(x\,z - |b|^2 - |a|^2\right)}{\det(\tilde{H}^+ \tilde{H})}.$$

Equation (24)

Using Equation (18), SNRs for each data streams are obtained as follows:

$$SNR_1 = \rho \frac{\det(\tilde{H}^+ \tilde{H})}{z\left(x\,z - |b|^2 - |a|^2\right)};$$

Equation (25)

$$SNR_2 = \rho \frac{\det(\tilde{H}^+ \tilde{H})}{z\left(x\,z - |b|^2 - |a|^2\right)};$$

Equation (26)

$$SNR_3 = \rho \frac{\det(\tilde{H}^+ \tilde{H})}{x\left(x\,z - |b|^2 - |a|^2\right)}; \text{ and}$$

Equation (27)

$$SNR_4 = \rho \frac{\det(\tilde{H}^+ \tilde{H})}{x\left(x\,z - |b|^2 - |a|^2\right)}.$$

<div align="right">Equation (28)</div>

For any above channel realization, the first two components of **d** (the ones which have the STBC code applied to them) have the same SNR, and the other two have also equal SNR. The second one is generally smaller than the first one. The ratio of the SNRs for the coded to the uncoded components of **d** is as follows:

$$\frac{SNR_{1,2}}{SNR_{3,4}} = \frac{x}{z} = \frac{\left\|H_{eff}(:,1)\right\|^2 + \left\|H_{eff}(:,2)\right\|^2}{\left\|H_{eff}(:,3)\right\|^2}.$$

<div align="right">Equation (29)</div>

Assuming that the three columns of $H_{eff}$ have similar properties, the SNR will be about 3 dB higher on average for the STBC coded symbols.

In implementing STBC, a pair of subsequent symbols may be transmitted via a same frequency or different frequencies. For evaluation, the simplest case of $N_{tx}=2$ and $N_{ss}=1$ is considered herein supposing that there is only one receive antenna at the receiver. The effective channel matrix is represented as a $1 \times 2$ matrix as follows:

$$H_{eff} = \begin{bmatrix} h_1 & h_2 \end{bmatrix},$$

<div align="right">Equation (30)</div>

and the data vector becomes as follows:

$$d = \begin{bmatrix} d_{k,1,2m} \\ d^*_{k,1,2m+1} \end{bmatrix}.$$

<div align="right">Equation (31)</div>

When the same frequency is used for the successive symbols, $H_{eff}$ is the same for both symbols and Equation (5) becomes as follows:

$$y_k = \begin{bmatrix} h_1 & -h_2 \\ h_2^* & h_1^* \end{bmatrix} \begin{bmatrix} d_{k,1,2m} \\ d^*_{k,1,2m+1} \end{bmatrix} + \begin{bmatrix} n_{k,2m} \\ n^*_{k,2m+1} \end{bmatrix}.$$

<div align="right">Equation (32)</div>

If a zero forcing receiver is used, the first step is to multiply $y_k$ by the Hermitian conjugate of the channel matrix:

$$\tilde{H} = \begin{bmatrix} h_1 & -h_2 \\ h_2^* & h_1^* \end{bmatrix};$$

to get

$$\tilde{H}^+ y_k = \begin{bmatrix} h_1^* & h_2 \\ -h_2^* & h_1 \end{bmatrix} \begin{bmatrix} h_1 & -h_2 \\ h_2^* & h_1^* \end{bmatrix} \begin{bmatrix} d_{k,1,2m} \\ d_{k,1,2m+1}^* \end{bmatrix} + \begin{bmatrix} h_1^* & h_2 \\ -h_2^* & h_1 \end{bmatrix} \begin{bmatrix} n_{k,2m} \\ n_{k,2m+1}^* \end{bmatrix}$$

$$= \begin{bmatrix} |h_1|^2 + |h_2|^2 & 0 \\ 0 & |h_1|^2 + |h_2|^2 \end{bmatrix} \begin{bmatrix} d_{k,1,2m} \\ d_{k,1,2m+1}^* \end{bmatrix} + \begin{bmatrix} h_1^* & h_2 \\ -h_2^* & h_1 \end{bmatrix} \begin{bmatrix} n_{k,2m} \\ n_{k,2m+1}^* \end{bmatrix}.$$

$$\text{Equation (33)}$$

The diagonal matrix elements $|h_1|^2 + |h_2|^2$ in the signal part represent the diversity of order 2 that is gained by the STBC code.

When different frequencies are used for the successive symbols, the effective channels for the two symbols are as follows:

$H_{eff} = [h_1 \ h_2]$ for the first symbol; and
$H_{eff} = [g_1 \ g_2]$ for the second symbol.

In this case the modified Equation (5) becomes as follows:

$$y_k = \begin{bmatrix} h_1 & -h_2 \\ g_2^* & g_1^* \end{bmatrix} \begin{bmatrix} d_{k,1,2m} \\ d_{k,1,2m+1}^* \end{bmatrix} + \begin{bmatrix} n_{k,2m} \\ n_{k,2m+1}^* \end{bmatrix}; \qquad \text{Equation (34)}$$

and the followings are obtained:

$$\tilde{H} = \begin{bmatrix} h_1 & -h_2 \\ g_2^* & g_1^* \end{bmatrix}; \qquad \text{Equation (35)}$$

and

$$\tilde{H}^+ y_k = \begin{bmatrix} h_1^* & g_2 \\ -h_2^* & g_1 \end{bmatrix} \begin{bmatrix} h_1 & -h_2 \\ g_2^* & g_1^* \end{bmatrix} \begin{bmatrix} d_{k,1,2m} \\ d_{k,1,2m+1}^* \end{bmatrix} + \begin{bmatrix} h_1^* & g_2 \\ -h_2^* & g_1 \end{bmatrix} \begin{bmatrix} n_{k,2m} \\ n_{k,2m+1}^* \end{bmatrix}$$

$$= \begin{bmatrix} |h_1|^2 + |g_2|^2 & -h_1^* h_2 + g_1^* g_2 \\ -h_2^* h_1 + g_2^* g_1 & |h_2|^2 + |g_2|^2 \end{bmatrix} \begin{bmatrix} d_{k,1,2m} \\ d_{k,1,2m+1}^* \end{bmatrix} + \begin{bmatrix} h_1^* & g_2 \\ -h_2^* & g_1 \end{bmatrix} \begin{bmatrix} n_{k,2m} \\ n_{k,2m+1}^* \end{bmatrix}.$$

$$\text{Equation (36)}$$

The diagonal matrix elements $|h_1|^2 + |g_2|^2$ in the signal part represent the diversity of order 2 that is gained by the STBC code. In this case, the diagonal elements still represent diversity of order 2. However, the off-diagonal elements contribute interference (i.e., non-orthogonality).

For the 2×1 case of Table 1, Equation (5) becomes as follows:

$$y_k = \begin{bmatrix} h_1 & -h_2 \\ h_2^* & h_1^* \end{bmatrix} \begin{bmatrix} d_{k,1,2m} \\ d_{k,1,2m+1}^* \end{bmatrix} + \begin{bmatrix} n_{k,2m} \\ n_{k,2m+1}^* \end{bmatrix}; \qquad \text{Equation (37)}$$

wherein

$$\widetilde{H} = \begin{bmatrix} h_1 & -h_2 \\ h_2^* & h_1^* \end{bmatrix} ;$$

Equation (38)

and

$$\boldsymbol{d} = \begin{bmatrix} d_{k,1,2m} \\ d_{k,1,2m+1}^* \end{bmatrix} .$$

Equation (39)

The MMSE estimator of $\boldsymbol{d}$ in this case is as follows:

$$\hat{\boldsymbol{d}} = \rho\, \widetilde{H}^+ \left( \rho\, \widetilde{H}\, \widetilde{H}^+ + \boldsymbol{I} \right)^{-1} \boldsymbol{y}_k .$$

Equation (40)

$$\widetilde{H}\, \widetilde{H}^+ = \begin{bmatrix} h_1 & -h_2 \\ h_2^* & h_1^* \end{bmatrix} \begin{bmatrix} h_1^* & h_2 \\ -h_2^* & h_1 \end{bmatrix} = \begin{bmatrix} |h_1|^2 + |h_2|^2 & 0 \\ 0 & |h_1|^2 + |h_2|^2 \end{bmatrix} .$$

Equation (41)

Equation (40) becomes:

$$\hat{\boldsymbol{d}} = \rho \begin{bmatrix} h_1^* & h_2 \\ -h_2^* & h_1 \end{bmatrix} \begin{bmatrix} \rho\left(|h_1|^2 + |h_2|^2\right)+1 & 0 \\ 0 & \rho\left(|h_1|^2 + |h_2|^2\right)+1 \end{bmatrix}^{-1} \boldsymbol{y}_k ;$$

Equation (42)

or,

$$\begin{bmatrix} \hat{d}_{2m} \\ \hat{d}_{2m+1}^* \end{bmatrix} = \frac{\rho}{\rho\left(|h_1|^2 + |h_2|^2\right)+1} \begin{bmatrix} h_1^* & h_2 \\ -h_2^* & h_1 \end{bmatrix} \begin{bmatrix} y_{2m} \\ y_{2m+1}^* \end{bmatrix} .$$

Equation (43)

Alternatively, the MMSE estimates of $d_{2m}$ and $d_{2m+1}$ may be found using just $y_{2m}$ and then $y_{2m+1}$ and then adding them up. Applying this scheme for the first symbol:

$$y_{2m} = \begin{bmatrix} h_1 & h_2 \end{bmatrix} \begin{bmatrix} d_{2m} \\ -d_{2m+1}^* \end{bmatrix} + n_{2m} ,$$

Equation (44)

and the MMSE estimate of the data vector from the first symbol is:

$$\begin{bmatrix} \hat{d}_{2m} \\ -\hat{d}_{2m+1}^* \end{bmatrix} = \rho \begin{bmatrix} h_1^* \\ h_2^* \end{bmatrix} \left( \rho [h_1 \quad h_2] \begin{bmatrix} h_1^* \\ h_2^* \end{bmatrix} + 1 \right)^{-1} y_{2m} \quad , \qquad \text{Equation (45)}$$

or,

$$\begin{bmatrix} \hat{d}_{2m} \\ -\hat{d}_{2m+1}^* \end{bmatrix} = \frac{\rho}{\rho \left( |h_1|^2 + |h_2|^2 \right) + 1} \begin{bmatrix} h_1^* \\ h_2^* \end{bmatrix} y_{2m} \quad . \qquad \text{Equation (46)}$$

Applying this scheme for the second symbol:

$$y_{2m+1} = [h_1 \quad h_2] \begin{bmatrix} d_{2m+1} \\ d_{2m}^* \end{bmatrix} + n_{2m+1} \quad , \qquad \text{Equation (47)}$$

and the MMSE estimate of the data vector from the second symbol is:

$$\begin{bmatrix} \hat{d}_{2m+1} \\ \hat{d}_{2m}^* \end{bmatrix} = \rho \begin{bmatrix} h_1^* \\ h_2^* \end{bmatrix} \left( \rho [h_1 \quad h_2] \begin{bmatrix} h_1^* \\ h_2^* \end{bmatrix} + 1 \right)^{-1} y_{2m+1} \quad , \qquad \text{Equation (48)}$$

or,

$$\begin{bmatrix} \hat{d}_{2m+1} \\ \hat{d}_{2m}^* \end{bmatrix} = \frac{\rho}{\rho \left( |h_1|^2 + |h_2|^2 \right) + 1} \begin{bmatrix} h_1^* \\ h_2^* \end{bmatrix} y_{2m+1} \quad . \qquad \text{Equation (49)}$$

Using Equations (47) and (49), the two estimates of $d_{2m}$ are added up as follows:

$$\hat{d}_{2m} = \frac{\rho}{\rho \left( |h_1|^2 + |h_2|^2 \right) + 1} \left[ h_1^* \, y_{2m} + h_2 \, y_{2m+1}^* \right] \quad . \qquad \text{Equation (50)}$$

The result is same to the result obtained in Equation (43). Doing the sum for the estimate of $d_{2m+1}$ will also result in the same as that from Equation (43). Thus, in the simple 2×1 Alamouti scheme, the two decoding techniques are identical. However, it may not be same in the 3×2 case in Table 1.

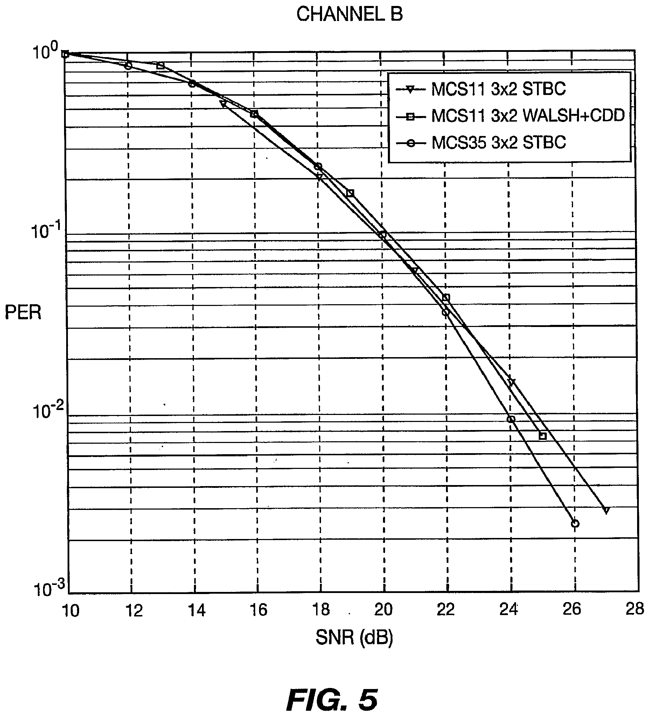

Figures 4 and 5 show simulation results for an IEEE 802.11n channels E and B using a 3×2 antenna configuration and a linear MMSE (LMMSE) receiver. The simulation results show that the case using an unequal modulation scheme of 64 QAM and QPSK has about 1.5 dB (0.8 dB) better in terms of packet error rate (PER) than the case using equal modulation scheme of 16 QAM and 16 QAM for channel E (channel B).

The transmitter and the receiver may be a wireless transmit/receive unit (WTRU) or a base station. The terminology "WTRU" includes but is not limited to a user equipment (UE), a mobile station, a fixed or mobile subscriber unit, a pager, a cellular telephone, a personal digital assistant (PDA), a computer, or any other type of user device capable of operating in a wireless environment. The terminology "base station" includes but is not limited to a Node-B, a site controller, an access point (AP), or any other type of interfacing device capable of operating in a wireless environment.

Not claimed examples

1. A method for implementing spatial data processing with unequal MCSs in a wireless communication system including a transmitter and a receiver.

2. The method of example 1 comprising the step of generating a plurality of data streams from at least one input data.

3. The method of example 2 comprising the step of performing a spatial processing on at least one of the data streams to generate a plurality of spatial streams, an MCS for each data stream being selected independently.

4. The method of example 3 comprising the step of transmitting the spatial streams via multiple transmit antennas.

5. The method as in any of the examples 3-4, wherein the spatial processing is performed only a portion of the data streams.

6. The method as in any of the examples 3-5, wherein an MCS for a data stream on which a spatial processing is performed is different from an MCS for a data stream on which a spatial processing is not performed.

7. The method as in any of the examples 3-6, wherein the spatial processing is STBC performed on at least one of the data streams.

8. The method of example 7, wherein a pair of symbols for the STBC on the data stream are mapped to a same frequency.

9. The method of example 7, wherein a pair of symbols for the STBC on the data stream are mapped to different frequencies.

10. The method as in any of the examples 3-9, wherein the spatial processing is at least one of STBC, SFBC, quasi-orthogonal Alamouti coding and time reversed space time block coding is performed on at least one of the data streams.

11. The method as in any of the examples 3-10, wherein linear spatial processing is performed on the data streams.

12. The method of 11, wherein CDD is performed on the spatial streams.

13. The method as in any of the examples 11-12, wherein an antennal mapping matrix is multiplied to the spatial streams.

14. The method of example 13, wherein the antenna mapping matrix is an identity matrix.

15. The method of example 13, wherein the antenna mapping matrix is for spatial spreading.

16. The method of example 13, wherein the antenna mapping matrix is a channel-specific steering matrix.

17. The method of example 16, wherein the antenna mapping matrix includes a set of channel eigenvectors.

18. The method as in any of the examples 3-17, wherein the MCS for each data stream is determined based on a signal-to-noise ratio of each spatial stream associated with the data stream.

19. The method as in any of the examples 4-18, further comprising the step of receiving the spatial streams with at least one receive antenna.

20. The method of example 19 comprising the step of performing channel estimation to generate a channel matrix.

21. The method of example 20 comprising the step of decoding the received spatial streams using the channel matrix to recover the input data.

22. The method of example 21, wherein MMSE decoding is used for decoding the received data streams.

23. The method of example 21, wherein ZF decoding is used for decoding the received data streams.

24. The method as in any of the examples 1-23, wherein the wireless communication system is an OFDM system.

25. The method as in any of the examples 1-23, wherein the wireless communication system is one of a MS-CDMA system and a CDMA system.

26. A transmitter for implementing spatial data processing with unequal MCSs.

27. The transmitter of example 26 comprising a spatial processor for performing spatial processing on at least one of a plurality of data streams, an MCS for each data stream being selected independently.

28. The transmitter of example 27 comprising a plurality of transmit antennas for transmitting the data streams.

29. The transmitter as in any of the examples 27-28, wherein the spatial processor is configured to perform spatial processing only a portion of the data streams.

30. The transmitter as in any of the examples 27-29, wherein an MCS for a data stream on which a spatial processing is performed is different from an MCS for a data stream on which a spatial processing is not performed.

31. The transmitter as in any of the examples 27-30, wherein the spatial processor is configured to perform STBC on at least one of the data streams.

32. The transmitter of example 31, wherein the spatial processor is configured to map a pair of symbols for the STBC on the data stream to a same frequency.

33. The transmitter of example 31, wherein the spatial processor is configured to map a pair of symbols for the STBC on the data stream to different frequencies.

34. The transmitter as in any of the examples 27-33, wherein the spatial processor is configured to perform at least one of STBC, SFBC, quasi-orthogonal Alamouti coding and time reversed space time block coding on at least one of the data streams.

35. The transmitter as in any of the examples 27-34, wherein the spatial processor is configured to perform linear spatial processing on the data streams.

36. The transmitter of example 35, wherein the spatial processor is configured to perform CDD on the spatial streams.

37. The transmitter as in any of the examples 35-36, wherein the spatial processor is configured to apply an antennal mapping matrix to the spatial streams.

38. The transmitter of example 37, wherein the antenna mapping matrix is an identity matrix.

39. The transmitter of example 37, wherein the antenna mapping matrix is for spatial spreading.

40. The transmitter of example 37, wherein the antenna mapping matrix is a channel-specific steering matrix.

41. The transmitter of example 40, wherein the antenna mapping matrix includes a set of channel eigenvectors.

42. The transmitter as in any of the examples 27-41, wherein the MCS for each data stream is determined based on a signal-to-noise ratio of each spatial stream associated with the data stream.

43. A receiver for implementing spatial data processing with unequal MCSs.

44. The receiver of example 43 comprising at least one receive antenna for receiving a plurality of spatial streams, an MCS for each data stream mapped to the spatial streams being selected independently at a transmitter.

45. The receiver of example 44 comprising a channel estimator for performing channel estimation to generate a channel matrix.

46. The receiver of example 45 comprising a spatial decoder for decoding the received spatial streams using the channel matrix.

47. The receiver of example 46, wherein the spatial decoder is configured to perform MMSE decoding for decoding the received spatial streams.

48. The receiver of example 46, wherein the spatial decoder is configured to perform ZF decoding for decoding the received spatial streams.

49. In a wireless communication system including a transmitter and a receiver, a method for implementing spatial data processing with unequal modulation and coding schemes (MCSs), the method comprising:

generating a plurality of data streams from at least one input data;
performing a spatial processing on at least one of the data streams to generate a plurality of spatial streams, an MCS for each data stream being selected independently; and
transmitting the spatial streams via multiple transmit antennas.

50. The method of example 49 wherein the spatial processing is performed only a portion of the data streams.

51. The method of example 50 wherein an MCS for a data stream on which a spatial processing is performed is different from an MCS for a data stream on which a spatial processing is not performed.

52. The method of example 49 wherein the spatial processing is space time block coding (STBC) performed on at least one of the data streams.

53. The method of example 52 wherein a pair of symbols for the STBC on the data stream are mapped to a same frequency.

54. The method of example 52 wherein a pair of symbols for the STBC on the data stream are mapped to different frequencies.

55. The method of example 49 wherein the spatial processing is at least one of space time block coding (STBC), space frequency block coding (SFBC), quasi-orthogonal Alamouti coding and time reversed space time block coding is performed on at least one of the data streams.

56. The method of example 49 wherein linear spatial processing is performed on the data streams.

57. The method of example 56 wherein cyclic delay diversity (CDD) is performed on the spatial streams.

58. The method of example 56 wherein an antennal mapping matrix is multiplied to the spatial streams.

59. The method of example 58 wherein the antenna mapping matrix is an identity matrix.

60. The method of example 58 wherein the antenna mapping matrix is for spatial spreading.

61. The method of example 58 wherein the antenna mapping matrix is a channel-specific steering matrix.

62. The method of example 61 wherein the antenna mapping matrix includes a set of channel eigenvectors.

63. The method of example 49 wherein the MCS for each data stream is determined based on a signal-to-noise ratio of each spatial stream associated with the data stream.

64. The method of example 49 further comprising:

receiving the spatial streams with at least one receive antenna;
performing channel estimation to generate a channel matrix; and
decoding the received spatial streams using the channel matrix to recover the input data.

65. The method of example 64 wherein minimum mean square error (MMSE) decoding is used for decoding the received data streams.

66. The method of example 64 wherein zero forcing (ZF) decoding is used for decoding the received data streams.

67. The method of example 49 wherein the wireless communication system is an orthogonal frequency division multiplexing (OFDM) system.

68. The method of example 49 wherein the wireless communication system is one of a multi-carrier code division multiple access (MS-CDMA) system and a CDMA system.

69. A transmitter for implementing spatial data processing with unequal modulation and coding schemes (MCSs), the transmitter comprising:

a spatial processor for performing spatial processing on at least one of a plurality of data streams, an MCS for each data stream being selected independently; and
a plurality of transmit antennas for transmitting the data streams.

70. The transmitter of example 69 wherein the spatial processor is configured to perform spatial processing only a portion of the data streams.

71. The transmitter of example 70 wherein an MCS for a data stream on which a spatial processing is performed is different from an MCS for a data stream on which a spatial processing is not performed.

72. The transmitter of example 69 wherein the spatial processor is configured to perform space time block coding (STBC) on at least one of the data streams.

73. The transmitter of example 70 wherein the spatial processor is configured to map a pair of symbols for the STBC on the data stream to a same frequency.

74. The transmitter of example 70 wherein the spatial processor is configured to map a pair of symbols for the STBC on the data stream to different frequencies.

75. The transmitter of example 69 wherein the spatial processor is configured to perform at least one of space time block coding (STBC), space frequency block coding (SFBC), quasi-orthogonal Alamouti coding and time reversed space time block coding on at least one of the data streams.

76. The transmitter of example 69 wherein the spatial processor is configured to perform linear spatial processing on the data streams.

77. The transmitter of example 76 wherein the spatial processor is configured to perform cyclic delay diversity (CDD) on the spatial streams.

78. The transmitter of example 76 wherein the spatial processor is configured to apply an antennal mapping matrix to the spatial streams.

79. The transmitter of example 78 wherein the antenna mapping matrix is an identity matrix.

80. The transmitter of example 78 wherein the antenna mapping matrix is for spatial spreading.

81. The transmitter of example 78 wherein the antenna mapping matrix is a channel-specific steering matrix.

82. The transmitter of example 81 wherein the antenna mapping matrix includes a set of channel eigenvectors.

83. The transmitter of example 79 wherein the MCS for each data stream is determined based on a signal-to-noise ratio of each spatial stream associated with the data stream.

84. A receiver for implementing spatial data processing with unequal modulation and coding schemes (MCSs), the receiver comprising:

at least one receive antenna for receiving a plurality of spatial streams, an MCS for each data stream mapped to the spatial streams being selected independently at a transmitter;
a channel estimator for performing channel estimation to generate a channel matrix; and
a spatial decoder for decoding the received spatial streams using the channel matrix.

85. The receiver of example 84 wherein the spatial decoder is configured to perform minimum mean square error (MMSE) decoding for decoding the received spatial streams.

86. The receiver of example 84 wherein the spatial decoder is configured to perform zero forcing (ZF) decoding for decoding the received spatial streams.

Although the features and elements of the present invention are described in the preferred embodiments in particular combinations, each feature or element can be used alone without the other features and elements of the preferred embodiments or in various combinations with or without other features and elements of the present invention. The methods or flow charts provided in the present invention may be implemented in a computer program, software, or firmware tangibly embodied in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) module.

**Claims**

1. A method for implementing spatial data processing, the method **characterised by**:

   selecting a first modulation and coding scheme, MCS, and a second MCS, wherein the first MCS is selected to be a higher order MCS than the second MCS, wherein the selected first MCS is to be used for a first spatial stream and the selected second MCS is to be used for a second spatial stream;
   generating the first spatial stream using the selected first MCS and the second spatial stream using the selected second MCS;
   performing space time block coding, STBC, on the first spatial stream and the second spatial stream to generate a first space-time stream, a second space-time stream, and a third space-time stream, wherein the first space-time stream and the second space-time stream are generated from the first spatial stream, and the third space-time stream is generated from the second spatial stream;
   applying cyclic shifting to the first space-time stream, the second space-time stream, and the third space-time stream to generate three cyclically shifted space-time streams; and
   transmitting the three cyclically shifted space-time streams via three antennas.

2. The method of claim 1 further comprising multiplying an antenna mapping matrix to the three cyclically shifted space-time streams.

3. The method of claim 2 wherein the antenna mapping matrix is a channel-specific steering matrix.

4. The method of claim 2 wherein the antenna mapping matrix includes a set of channel eigenvectors.

5. The method of claim 1 wherein each of the first MCS and the second MCS is determined based on a signal-to-noise ratio of the first spatial stream and the second spatial stream respectively.

6. A transmitter (100) for implementing spatial data processing, the transmitter **characterised by**:

   a processor configured at least to:

   select a first modulation and coding scheme, MCS, wherein the first MCS is selected to be a higher order MCS than the second MCS, wherein the selected first MCS is to be used for a first spatial stream and the selected second MCS is to be used for a second spatial stream;
   generate the first spatial stream using the selected first MCS and the second spatial stream using the selected second MCS;
   perform space time block coding, STBC, on the first spatial stream and the second spatial stream to generate a first space-time stream, a second space-time stream, and a third space-time stream, wherein the first space-time stream and the second space-time stream are generated from the first spatial stream, and the third space-time stream is generated from the second spatial stream;
   apply cyclic shifting to the first space-time stream, the second space-time stream, and the third space-time stream to generate three cyclically shifted space-time streams; and

   a transmitter (126) configured to transmit the three cyclically shifted space-time streams via a plurality of antennas.

7. The transmitter (100) of claim 6, wherein the processor is configured to multiply an antenna mapping matrix to the three cyclically shifted space-time streams.

8. The transmitter (100) of claim 7, wherein the antenna mapping matrix is a channel-specific steering matrix.

9. The transmitter (100) of claim 7, wherein the antenna mapping matrix includes a set of channel eigenvectors.

10. The transmitter (100) of claim 6, wherein each of the first MCS and the second MCS is determined based on a signal-to-noise ratio of the first spatial stream and the second spatial stream respectively.


**Patentansprüche**

1. Verfahren zum Umsetzen räumlicher Datenverarbeitung, wobei das Verfahren **gekennzeichnet ist durch**:

   Auswählen eines ersten Modulierungs- und Codierungsschemas, MCS, und eines zweiten MCS, wobei das erste MCS als ein MCS einer höheren Ordnung als das zweite MCS ausgewählt wird, wobei das ausgewählte erste MCS zur Verwendung für einen ersten räumlichen Datenstrom und das ausgewählte zweite MCS zur Verwendung für einen zweiten räumlichen Datenstrom vorgesehen ist,
   Erzeugen des ersten räumlichen Datenstroms unter Verwendung des ausgewählten ersten MCS und des zweiten räumlichen Datenstroms unter Verwendung des ausgewählten zweiten MCS,
   Durchführen einer Raumzeitblockcodierung, STBC, mit dem ersten räumlichen Datenstrom und dem zweiten räumlichen Datenstrom, um einen ersten Raumzeitdatenstrom, einen zweiten Raumzeitdatenstrom und einen dritten Raumzeitdatenstrom zu erzeugen, wobei der erste Raumzeitdatenstrom und der zweite Raumzeitdatenstrom aus dem ersten räumlichen Datenstrom erzeugt werden und der dritte Raumzeitdatenstrom aus dem zweiten räumlichen Datenstrom erzeugt wird,
   Anwenden einer zyklischen Verschiebung auf den ersten Raumzeitdatenstrom, den zweiten Raumzeitdatenstrom und den dritten Raumzeitdatenstrom, um drei zyklisch verschobene Raumzeitdatenströme zu erzeugen, und
   Übertragen der drei zyklisch verschobenen Raumzeitdatenströme über drei Antennen.

2. Verfahren nach Anspruch 1, ferner umfassend ein Multiplizieren einer Antennenabbildungsmatrix auf die drei zyklisch verschobenen Raumzeitdatenströme.

3. Verfahren nach Anspruch 2, wobei es sich bei der Antennenabbildungsmatrix um eine kanalspezifische Steuerungsmatrix handelt.

4. Verfahren nach Anspruch 2, wobei die Antennenabbildungsmatrix einen Satz von Kanaleigenvektoren beinhaltet.

5. Verfahren nach Anspruch 1, wobei das erste MCS und das zweite MCS jeweils auf Grundlage eines Signal-Rausch-Verhältnisses des ersten räumlichen Datenstroms bzw. des zweiten räumlichen Datenstroms bestimmt werden.

6. Sender (100) zum Umsetzen einer räumlichen Datenverarbeitung, wobei der Sender **gekennzeichnet ist durch**: einen Prozessor, der konfiguriert ist, um mindestens:

   ein erstes Modulierungs- und Codierungsschema, MCS, auszuwählen, wobei das erste MCS als ein MCS einer höheren Ordnung als das zweite MCS ausgewählt wird, wobei das ausgewählte erste MCS zur Verwendung für einen ersten räumlichen Datenstrom und das ausgewählte zweite MCS zur Verwendung für einen zweiten räumlichen Datenstrom vorgesehen ist,
   den ersten räumlichen Datenstrom unter Verwendung des ausgewählten ersten MCS und den zweiten räumlichen Datenstrom unter Verwendung des ausgewählten zweiten MCS zu erzeugen,
   mit dem ersten räumlichen Datenstrom und dem zweiten räumlichen Datenstrom eine Raumzeitblockcodierung, STBC, durchzuführen, um einen ersten Raumzeitdatenstrom, einen zweiten Raumzeitdatenstrom und einen dritten Raumzeitdatenstrom zu erzeugen, wobei der erste Raumzeitdatenstrom und der zweite Raumzeitdatenstrom aus dem ersten räumlichen Datenstrom erzeugt werden und der dritte Raumzeitdatenstrom aus dem zweiten räumlichen Datenstrom erzeugt wird,
   auf den ersten Raumzeitdatenstrom, den zweiten Raumzeitdatenstrom und den dritten Raumzeitdatenstrom eine zyklische Verschiebung anzuwenden, um drei zyklisch verschobene Raumzeitdatenströme zu erzeugen, und

einen Sender (126), der dafür konfiguriert ist, die drei zyklisch verschobenen Raumzeitdatenströme über eine Vielzahl von Antennen zu übertragen.

7. Sender (100) nach Anspruch 6, wobei der Prozessor dafür konfiguriert ist, eine Antennenabbildungsmatrix auf die drei zyklisch verschobenen Raumzeitdatenströme zu multiplizieren.

8. Sender (100) nach Anspruch 7, wobei es sich bei der Antennenabbildungsmatrix um eine kanalspezifische Steuerungsmatrix handelt.

9. Sender (100) nach Anspruch 7, wobei die Antennenabbildungsmatrix einen Satz von Kanaleigenvektoren beinhaltet.

10. Sender (100) nach Anspruch 6, wobei das erste MCS und das zweite MCS jeweils auf Grundlage eines Signal-Rausch-Verhältnisses des ersten räumlichen Datenstroms bzw. des zweiten räumlichen Datenstroms bestimmt werden.


**Revendications**

1. Procédé d'implémentation de traitement de données spatiales, le procédé étant **caractérisé par** :

sélectionner un premier mécanisme de codage et modulation, MCS, et un second MCS, dans lequel le premier MCS est sélectionné afin d'être un MCS d'ordre supérieur au second MCS, dans lequel le premier MCS sélectionné doit être utilisé pour un premier flux spatial et le second MCS sélectionné doit être utilisé pour un second flux spatial ;
générer le premier flux spatial en utilisant le premier MCS sélectionné et le second flux spatial en utilisant le second MCS sélectionné ;
effectuer un codage de bloc spatio-temporel, STBC, sur le premier flux spatial et le second flux spatial pour générer un premier flux spatio-temporel, un second flux spatio-temporel et un troisième flux spatio-temporel, dans lequel le premier flux spatio-temporel et le second flux spatio-temporel sont générées à partir du premier flux spatial, et le troisième flux spatio-temporel est généré à partir du second flux spatial ;
appliquer un décalage cyclique au premier flux spatio-temporel, au second flux spatio-temporel et au troisième flux spatio-temporel pour générer trois flux spatio-temporels décalés cycliquement ; et
transmettre les trois flux spatio-temporels décalés cycliquement via trois antennes.

2. Procédé selon la revendication 1, comprenant en outre de multiplier une matrice de mise en correspondance d'antenne par les trois flux spatio-temporels décalés cycliquement.

3. Procédé selon la revendication 2, dans lequel la matrice de mise en correspondance d'antenne est une matrice de direction spécifique de canal.

4. Procédé selon la revendication 2, dans lequel la matrice de mise en correspondance d'antenne inclut un ensemble de vecteurs propres de canal.

5. Procédé selon la revendication 1, dans lequel chacun du premier MCS et du second MCS est déterminé sur la base d'un rapport signal sur bruit du premier flux spatial et du second flux spatial respectivement.

6. Émetteur (100) pour implémenter un traitement de données spatiales, l'émetteur étant **caractérisé par** :
un processeur configuré au moins pour :

sélectionner un premier mécanisme de codage et modulation, MCS, et un second MCS, dans lequel le premier MCS est sélectionné afin d'être un MCS d'ordre supérieur au second MCS, dans lequel le premier MCS sélectionné doit être utilisé pour un premier flux spatial et le second MCS sélectionné doit être utilisé pour un second flux spatial ;
générer le premier flux spatial en utilisant le premier MCS sélectionné et le second flux spatial en utilisant le second MCS sélectionné ;
effectuer un codage de bloc spatio-temporel, STBC, sur le premier flux spatial et le second flux spatial pour générer un premier flux spatio-temporel, un second flux spatio-temporel et un troisième flux spatio-temporel, dans lequel le premier flux spatio-temporel et le second flux spatio-temporel sont générés à partir du premier flux spatial, et le troisième flux spatio-temporel est généré à partir du second flux spatial ;

appliquer un décalage cyclique au premier flux spatio-temporel, au second flux spatio-temporel et au troisième flux spatio-temporel pour générer trois flux spatio-temporels décalés cycliquement ; et

un émetteur (126) configuré pour transmettre les trois flux spatio-temporels décalés cycliquement via trois antennes.

7. Émetteur (100) selon la revendication 6, dans lequel le processeur est configuré pour multiplier une matrice de mise en correspondance d'antenne par les trois flux spatio-temporels décalés cycliquement.

8. Émetteur (100) selon la revendication 7, dans lequel la matrice de mise en correspondance d'antennes est une matrice de direction spécifique au canal.

9. Émetteur (100) selon la revendication 7, dans lequel la matrice de mise en correspondance d'antennes inclut un ensemble de vecteurs propres de canal.

10. Émetteur (100) selon la revendication 6, dans lequel chacun du premier MCS et du second MCS est déterminé sur la base d'un rapport signal sur bruit du premier flux spatial et du second flux spatial respectivement.

FIG. 1

*FIG. 2*

**FIG. 3**

CHANNEL E

**FIG. 4**

CHANNEL B

**FIG. 5**

**EP 3 059 890 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040196919 A1
- US 20040202257 A1